(19) Europäisches Patentamt
European Patent Office
Office européen des brevets

(11) **EP 1 099 956 B1**

(12) **FASCICULE DE BREVET EUROPEEN**

(45) Date de publication et mention
de la délivrance du brevet:
**31.01.2007   Bulletin 2007/05**

(51) Int Cl.:
*G01S 7/40* $^{(2006.01)}$       *G01S 13/34* $^{(2006.01)}$

(21) Numéro de dépôt: **00403077.1**

(22) Date de dépôt: **07.11.2000**

(54) **Méthode de contrôle pour radioaltimètre de type FM/CW et radioaltimètre concu pour la mise en oeuvre de cette méthode**

Verfahren zur Funktionsüberwachung eines FM/CW Radarhöhenmessers und Radarhöhenmesser zur Durchführung dieses Verfahrens

Monitoring method for a FM/CW type radio altimeter and radio altimeter for implementing said method

(84) Etats contractants désignés:
**DE FR GB IT SE**

(30) Priorité: **10.11.1999   FR 9914138**

(43) Date de publication de la demande:
**16.05.2001   Bulletin 2001/20**

(73) Titulaire: **Thales**
**75008 Paris (FR)**

(72) Inventeur: **Orlandi, Fabrice,**
**Thomson-CSF Propriété Intellec.**
**94117 Arcueil Cedex (FR)**

(74) Mandataire: **Chaverneff, Vladimir et al**
**Marks & Clerk France**
**31-33 Avenue Aristide Briand**
**94117 Arcueil Cédex (FR)**

(56) Documents cités:
EP-A- 0 667 536          EP-A- 0 762 541
DE-A- 19 744 731        FR-A- 2 750 766
US-A- 5 614 911

## Description

L'invention concerne les radioaltimètres de type FM/CW, où FM/CW est un sigle de la littérature anglo-saxonne correspondant à "frequency modulation/continuous wave". Ces radioaltimètres émettent une onde continue modulée linéairement en fréquence entre deux valeurs limites, c'est-à-dire une onde en dents de scie. Lorsque cette onde est reçue par le radioaltimètre après avoir été réfléchie par le sol, elle présente par rapport à l'onde émise un retard 2h/c ou h est la hauteur du radioaltimètre par rapport au sol et c la vitesse de la lumière ; la modulation étant linéaire ce retard est proportionnel à la fréquence de battement, f, obtenue par mélange du signal d'émission et du signal de réception ; connaissant la différence dF entre les deux valeurs limites et la durée Td de la modulation pour passer d'une valeur limite à l'autre, il est alors possible de calculer la hauteur h par la formule

$$h = Td.f.c/2.dF$$

En réalité le mélange des ondes émise et reçue ne donne pas que la fréquence de battement ; il donne tout un spectre de fréquences dont différents procédés de traitement permettent d'extraire la fréquence représentative de la hauteur à mesurer ; un tel procédé est par exemple décrit dans le brevet français 2 750 766.

Mais dans ces radioaltimètres connus rien ne permet, hormis en utilisant un banc de test, de contrôler la qualité des installations d'antenne d'émission et de réception branchées respectivement sur les accès d'émission et de réception du radioaltimètre. Or une telle appréciation serait fort utile pour, en particulier, être prévenu, dès qu'elles se produisent, des détériorations qui peuvent affecter une installation d'antenne ou pour plus facilement tenir compte des échos parasites sur des obstacles liés au radioaltimètre.

Le brevet US 5 614 911 divulgue une méthode permettant de contrôler l'état de fonctionnement d'une antenne, consistant à émettre un signal vers une installation d'antenne, et à analyser le signal réfléchi en le comparant à un signal écho mémorisé au préalable.

La présente invention a pour but de pallier ce manque d'informations sur l'état des installations d'antenne c'est-à-dire non seulement sur les antennes d'émission et de réception et leur câble de raccordement mais aussi sur tout ce qui les entoure et influe plus ou moins sur le signal de battement obtenu par mélange des signaux d'émission et de réception.

Ceci est obtenu en émettant par le radioaltimètre un signal incident vers l'installation à contrôler et en étudiant l'onde réfléchie par l'installation concernée.

Selon l'invention il est proposé pour cela une méthode de contrôle de l'état de l'installation d'une antenne pour un radioaltimètre de type FM/CW ayant un accès d'émission et un accès de réception sur lesquels sont respectivement branchées une installation d'antenne d'émission et une installation d'antenne de réception le radioaltimètre comportant un oscillateur linéaire pour fournir un signal en dents de scie, avec une liaison vers l'accès d'émission, un circuit mélangeur avec deux liaisons respectivement vers l'oscillateur et l'accès de réception et un organe de traitement pour traiter les signaux de sortie du circuit mélangeur, caractérisée en ce que, pour contrôler l'une au moins des deux installations, elle consiste à émettre, du radioaltimètre vers l'installation à contrôler, un signal incident, à recueillir les signaux réfléchis par cette installation à contrôler en réponse à l'émission du signal incident et les diriger vers la seconde entré du circuit mélangeur et à étudier dans l'organe de traitement, les signaux réfléchis par l'installation à contrôler, cette étude portant sur la position et l'amplitude des raies du spectre du signal fourni par !e circuit mélangeur.

Il est également proposé un radioaltimètre de type FM/CW comportant d'une part, en série, un organe de commande, un oscillateur linéaire et des premiers éléments de couplage pour coupler l'oscillateur à une installation d'antenne d'émission et d'autre part un circuit mélangeur avec une première entrée couplée à l'oscillateur linéaire et une seconde entrée, des seconds éléments de couplage pour coupler une installation d'antenne de réception à la seconde entrée du circuit mélangeur et un organe de traitement pour traiter les signaux de sortie du circuit mélangeur, caractérisé en ce que, pour contrôler l'état d'une au moins des deux installations, il comporte des premiers moyens pour émettre un signal incident en direction de l'installation à contrôler et des seconds moyens pour recueillir les signaux réfléchis par l'installation à contrôler en réponse à l'émission du signal incident et les diriger vers la seconde entrée du circuit mélangeur, et en ce que l'organe de traitement est adapté à analyser en position et en amplitude les raies du spectre du signal fourni par le circuit mélangeur.

La présente invention sera mieux comprise et d'autres caractéristiques apparaîtront à l'aide de la description ci-après et des figures s'y rapportant qui représentent :

- la figure 1, un radioaltimètre selon l'art antérieur,
- la figure 2, un graphique relatif aux ondes émise et reçue par les radioaltimètres qui sont décrits dans ce document,
- les figures 3 à 5, des radioaltimètres selon l'invention.

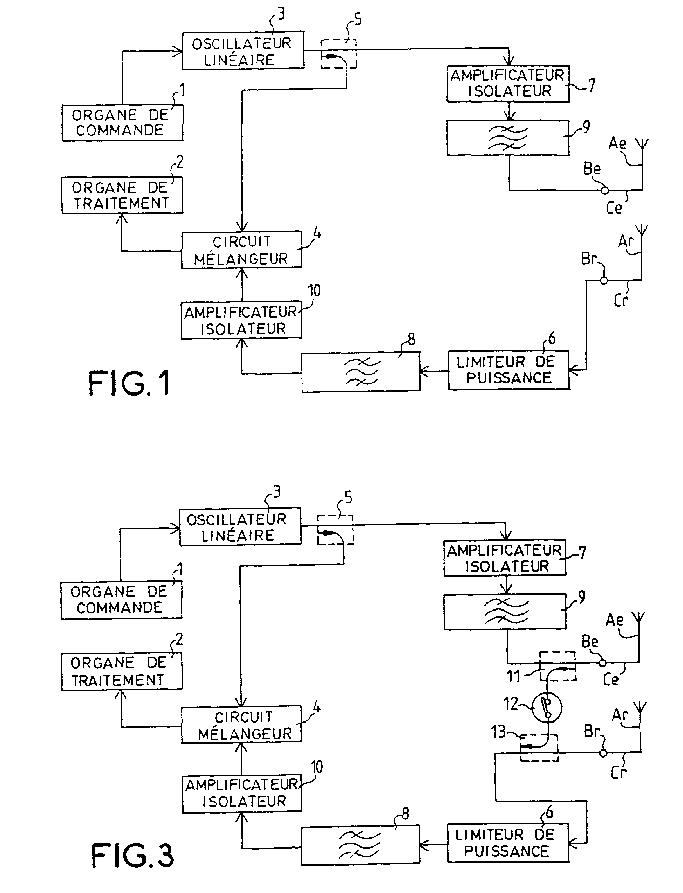

Sur les figures 1,3, 4 et 5 les éléments correspondants sont désignés par les mêmes repères.

La figure 1 montre un radioaltimètre selon l'art connu. Ce radioaltimètre comporte un organe de commande 1 et un organe de traitement 2 dont les fonctions sont réalisées à l'aide d'un microprocesseur. L'organe de commande, 1, commande un oscillateur linéaire, 3, dont le signal de sortie est fourni à un coupleur directif 5 qui, dans l'exemple décrit, est un coupleur à 20 dB. Le coupleur 5 transmet la majeure partie de l'énergie qu'il reçoit vers un accès d'émission Be, à travers un amplificateur-isolateur 7 suivi d'un filtre passe-bande 9 et le restant de l'énergie qu'il reçoit sur la première entrée d'un circuit mélangeur 4 dont les signaux de sortie sont fournis à l'organe de traitement 2. Un câble Cr relie une antenne d'émission Ae à l'accès Be.

Le radioaltimètre selon la figure 1 comporte également un accès de réception Br qu'un câble Cr relie à une antenne de réception Ar et, en série entre l'accès Br et la seconde entrée du circuit mélangeur 4, un limiteur de puissance 6, un filtre passe-bande 8 et un amplificateur isolateur 10.

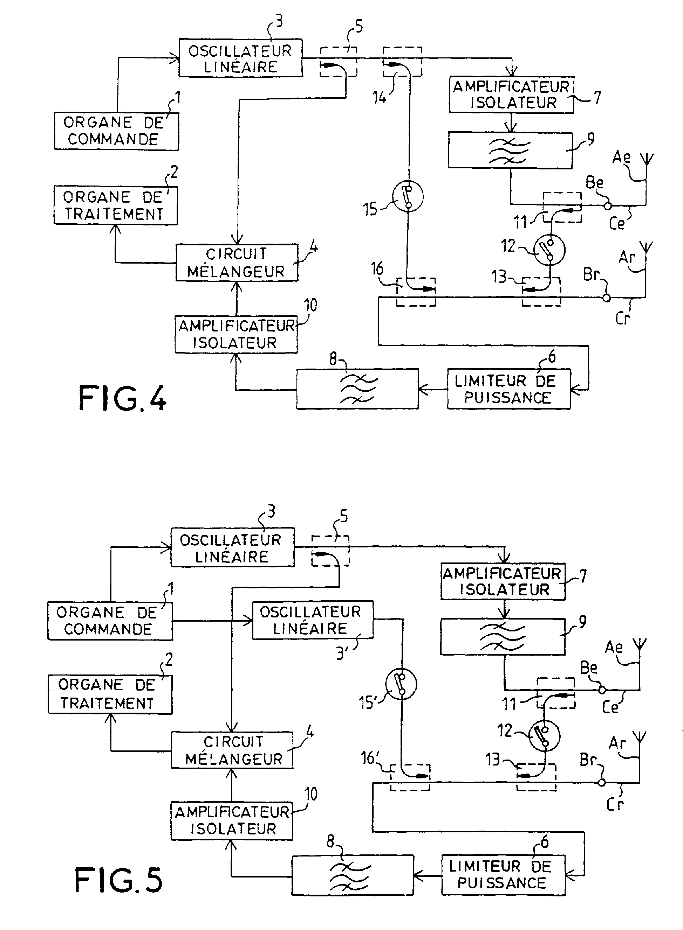

Dans le cas de l'exemple décrit à l'aide de la figure 1, comme dans le cas des exemples qui seront décrits à l'aide des figures 3 à 5, l'oscillateur linéaire est commandé pour fournir un signal dont la fréquence varie en dents de scie d'une valeur F1 à une valeur F2, avec un palier à la fréquence basse, F1.

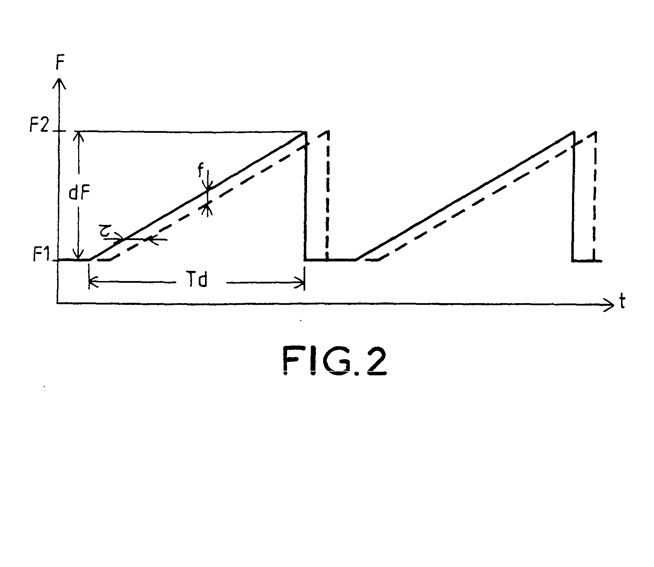

La figure 2 est un graphique qui donne en trait plein la variation dans le temps de la fréquence de l'onde émise par le radioaltimètre de la figure 1 et en trait interrompu la variation dans le temps de la fréquence de l'onde réfléchie par le sol et reçue par l'antenne de réception Ar ; la seconde courbe correspond à la première mais décalée du temps $\tau$ que met l'onde pour un aller et retour avec réflexion sur le sol. Comme il a été indiqué au début de ce document, la hauteur h que mesure le radioaltimètre est donnée par la formule

$$h = Td \cdot f \cdot c/2 \cdot dF$$

les grandeurs Td, f et dF sont repérées sur la figure 2 : Td durée d'une dent de scie, f fréquence de battement entre l'onde émise et l'onde réfléchie par le sol, dF largeur de la bande de fréquences parcourue par les dents de scie.

Avec un radioaltimètre comme celui de la figure 1 rien n'est prévu pour contrôler la qualité de l'installation d'antenne d'émission Ce, Ae et/ou de l'installation d'antenne de réception ; or ces installations présentent des imperfections, voire des défauts, qui, dans le spectre du signal fourni par le circuit mélangeur 4, ajoutent des raies parasites à la raie qui est produite par le battement entre l'onde émise et l'onde réfléchie par le sol à la verticale du radioaltimètre.

La figure 3 montre comment modifier le radioaltimètre de la figure 1 pour contrôler la qualité de l'installation d'antenne d'émission. Un coupleur directif 11 est inséré dans la liaison entre le filtre 9 et l'accès Be ; il est relié, via un interrupteur 12, à un autre coupleur directif 13 inséré entre l'accès Br et le limiteur de puissance 6.

Lorsque l'interrupteur 12 est fermé la majeure partie de l'énergie réfléchie par l'installation d'antenne d'émission est détournée de la voie d'émission pour être envoyée, sur la voie de réception, vers la seconde entrée du circuit mélangeur. Avec les raies que cette énergie détournée introduit dans le spectre du signal de battement délivré par la sortie du circuit mélangeur 4, l'organe de traitement, 2, mesure le coefficient de réflexion de l'installation d'antenne d'émission ainsi que la perte hyperfréquence dans le câble Ce ; par des fermetures de l'interrupteur 12 l'organe de traitement peut ainsi, à tout moment, vérifier l'état de l'installation d'antenne d'émission et, en particulier, déclencher une alerte lorsque les résultats des mesures deviennent anormaux à la suite, par exemple, d'une détérioration accidentelle du câble Ce ou de l'antenne Ae.

Ces mesures de coefficients de réflexion et de pertes hyperfréquences sont des mesures classiques, il est donc inutile de préciser comment les effectuer. Par contre il faut noter que l'oscillateur linéaire, tout en conservant une largeur dF constante pour la bande de fréquences parcourue par les dents de scie, est programmé pour avoir des durées Td de dent de scie telles que les fréquences de battement dues aux ondes réfléchies dans la voie d'émission se produisent à l'intérieur de la bande de fréquences dans laquelle l'organe de traitement effectue sa mesure ; dans l'exemple décrit cette bande s'étend de 40 à 110 kHz et les fréquences de battement sont amenées à 85 kHz. Pour ce type de fonctionnement la pente dF/Td de la dent de scie est modifiée progressivement en faisant varier Td, et ainsi les différentes fréquences de battement dues à la voie d'émission se produisent l'une après l'autre à 85 kHz où elles sont étudiées ; bien entendu les fréquences de battement à considérer dans cette étude de la qualité de l'installation d'antenne d'émission sont celles qui concernent des distances très faibles, de quelques centimètres à quelques mètres, correspondant à la voie d'émission et à l'entourage immédiat de la voie d'émission.

Les figures 4 et 5 montrent comment, de deux façons différentes, ajouter au radioaltimètre selon la figure 3, un contrôle de la qualité de l'installation d'antenne de réception.

Dans le cas de la figure 4 un premier coupleur directif, 14, est inséré dans la liaison entre le coupleur 5 et l'amplificateur-isolateur 7 ; ce premier coupleur est relié, via un interrupteur 15, à un second coupleur, 16, inséré dans la liaison entre le coupleur 13 et le limiteur de puissance 6. Le coupleur 14 détourne, vers le coupleur 16, une très faible partie de l'énergie qu'il reçoit en provenance de l'oscillateur 3 et le coupleur 16 dirige, vers l'antenne de réception Ar, la majeure partie de cette énergie détournée. Comme pour le contrôle de la qualité de l'installation d'antenne d'émission l'étude porte sur les fréquences de battement qui concernent des distances très faibles correspondant à des réflexions dans la voie de réception ou dans le voisinage immédiat de la voie de réception.

Dans le cas de la figure 5 le contrôle de la qualité de l'installation d'antenne de réception se fait en ajoutant au radioaltimètre selon la figure 3 un oscillateur linéaire auxiliaire, 3', commandé par l'organe de commande, et un interrupteur 15' suivi d'un coupleur directif 16' ; le coupleur 16' est inséré entre le coupleur 13 et le limiteur de puissance 6 ; le coupleur 16' dirige, lorsque l'interrupteur 15' est fermé, la majeure partie de l'énergie de l'oscillateur 3' vers l'installation d'antenne de réception. Ici le contrôle se fait donc en injectant dans la voie d'antenne de réception, en direction de l'antenne de réception, un signal produit par l'oscillateur auxiliaire et en étudiant les fréquences de battement à la sortie du circuit mélangeur. Le signal produit par l'oscillateur auxiliaire 3' doit reproduire, en synchronisme, les dents de scie de l'oscillateur principal 3.

Il est à noter que les trois contrôles d'installation d'antenne qui viennent d'être décrits à l'aide des figures 3 à 5 fonctionnent de la même façon : envoi d'un signal incident vers l'installation à contrôler et étude des fréquences de battement à la sortie du circuit mélangeur. Les trois contrôles se différencient par les installations contrôlées et/ou par la nature du signal incident : contrôle de l'installation d'antenne d'émission selon la figure 3 et de celle de réception selon les figures 4 et 5, utilisation, comme signal incident, du signal de l'oscillateur linéaire de la voie d'émission selon les figures 3 et 4, et du signal d'un oscillateur linéaire auxiliaire selon la figure 5.

La présente invention n'est pas limitée aux exemples décrits, c'est ainsi en particulier qu'il n'a pas été question du déclenchement des contrôles ; ce déclenchement peut se faire par un opérateur et/ou en automatique ; dans les deux cas l'organe de traitement est prévenu du contrôle à effectuer et ferme l'interrupteur utilisé pour ce contrôle ; pour ce qui est des contrôles en automatique, ils peuvent se déclencher de façon systématique par exemple au moment de la mise en marche du radioaltimètre ou périodiquement. De même l'organe de traitement peut déclencher une alarme sonore ou lumineuse dès qu'un contrôle d'installation d'antenne révèle une anomalie.

Il est à noter par ailleurs que si un radioaltimètre peut être équipé du seul contrôle d'installation d'antenne d'émission comme illustré par la figure 3, il peut également être équipé du seul contrôle d'installation d'antenne de réception, ce qui revient, sur les figures 4 et 5, à supprimer l'interrupteur 12 puis à remplacer les coupleurs 11 et 13 par des courts-circuits.

**Revendications**

1. Méthode de contrôle de l'état des installations d'antenne pour un radioaltimètre de type FM/CW ayant un accès d'émission (Be) et un accès de réception (Br) sur lesquels sont respectivement branchées une installation d'antenne d'émission (Ce, Ae) et une installation d'antenne de réception (Cr, Ar) le radioaltimètre comportant un oscillateur linéaire (3) pour fournir un signal en dents de scie, avec une liaison (7, 9) vers l'accès d'émission, un circuit mélangeur (4) avec deux liaisons respectivement vers l'oscillateur et l'accès de réception et un organe de traitement (2) pour traiter les signaux de sortie du circuit mélangeur, **caractérisée en ce que**, pour contrôler l'une au moins des deux installations, elle consiste à émettre, du radioaltimètre vers l'installation à contrôler, un signal incident, à recueillir les signaux réfléchis par l'installation à contrôler en réponse à l'émission du signal incident et les diriger vers la seconde entrée du circuit mélangeurs et à étudier, dans l'organe de traitement, les signaux réfléchis par l'installation à contrôler, cette étude portant sur la position et l'amplitude des raies du spectre du signal fourni par le circuit mélangeur.

2. Méthode selon la revendication 1, **caractérisée en ce que**, pour contrôler l'installation d'antenne d'émission (Ce, Ae), elle consiste à utiliser comme signal incident le signal en dents de scie, à détourner une partie du signal réfléchi par l'installation d'antenne d'émission pour l'envoyer vers le circuit mélangeur (4) en l'introduisant dans la liaison entre l'accès de réception (Br) et le circuit mélangeur.

3. Méthode selon la revendication 1, **caractérisée en ce que**, pour contrôler l'installation d'antenne de réception (Cr, Ar), elle consiste à détourner une partie du signal en dents de scie afin de l'utiliser pour le signal incident, et à envoyer une partie du signal ainsi détourné vers l'installation d'antenne de réception en l'introduisant dans la liaison entre le circuit mélangeur (4) et l'accès de réception (Br).

4. Méthode selon la revendication 1, **caractérisée en ce que**, pour contrôler l'installation d'antenne de réception (Cr, Ar), elle consiste à utiliser, afin de fournir le signal incident, un oscillateur auxiliaire (3') pour délivrer un signal semblable à, et en synchronisme avec celui de l'oscillateur linéaire (3), à envoyer le signal de l'oscillateur auxiliaire vers l'installation d'antenne de réception en l'introduisant dans la liaison entre le circuit mélangeur (4) et l'accès de réception (Br).

5. Radioaltimètre de type FM/CW comportant d'une part, en série, un organe de commande (1), un oscillateur linéaire (3) et des premiers éléments de couplage (7, 9) pour coupler l'oscillateur à une installation d'antenne d'émission (Ce, Ae) et d'autre part un circuit mélangeur (4) avec une première entrée couplée à l'oscillateur linéaire et une seconde entrée, des seconds éléments de couplage (6, 8, 10) pour coupler une installation d'antenne de réception (Cr, Ar) à la seconde entrée du circuit mélangeur et un organe de traitement (2) pour traiter les signaux de sortie du circuit mélangeur, **caractérisé en ce que**, pour contrôler l'état d'une au moins des deux installations, il comporte des premiers moyens pour émettre un signal incident en direction de l'installation à contrôler et des seconds moyens pour recueillir les signaux réfléchis par l'installation à contrôler en réponse à l'émission du signal incident et les diriger vers la seconde entrée du circuit mélangeur, et **en ce que** l'organe de traitement est adapté à analyser en position et en amplitude les raies du spectre du signal fourni par le circuit mélangeur.

**6.** Radioaltimètre selon la revendication 5, **caractérisé en ce que**, l'installation à contrôler étant celle de l'antenne d'émission, les premiers moyens comportent l'oscillateur linéaire (3) et les premiers éléments de couplage (7, 9) et les seconds moyens comportent un premier et un second coupleur directif (11, 13) reliés par un interrupteur (12), le premier coupleur (11) étant intercalé entre les premiers éléments (5, 7, 9) et l'installation d'antenne d'émission (Ce, Ae) et le second coupleur (13) étant intercalé entre l'installation d'antenne de réception (Cr, Ar) et les seconds éléments (6, 8, 10) et **en ce que** les deux coupleurs (11, 13) sont connectés pour, lorsque l'interrupteur (12) est fermé, détourner vers les seconds éléments la majeure partie de l'énergie réfléchie par l'installation d'antenne d'émission.

**7.** Radioaltimètre selon la revendication 5, **caractérisé en ce que**, l'installation à contrôler étant celle de l'antenne de réception, les premiers moyens comportent un premier et un second coupleur directif (14, 16) reliés par un interrupteur (15), le premier coupleur (14) étant intercalé entre l'oscillateur (3) et les premiers éléments (7, 9) et le second coupleur (16) entre l'installation d'antenne de réception (Cr, Ar) et les seconds éléments (6, 8, 10) et **en ce que** les deux coupleurs sont connectés pour, lorsque l'interrupteur (15) est fermé, détourner, vers l'installation d'antenne de réception, une faible partie de l'énergie délivrée par l'oscillateur (3).

**8.** Radioaltimètre selon la revendication 5, **caractérisé en ce que**, l'installation à contrôler étant celle de l'antenne de réception, les premiers moyens comportent un oscillateur linéaire auxiliaire (3') et un coupleur directif (16') reliés par un interrupteur (15'), l'oscillateur linéaire auxiliaire étant commandé par l'organe de commande (1) et le coupleur étant intercalé entre l'installation d'antenne de réception (Cr, Ar) et les seconds éléments (6, 8, 10) et **en ce que** le coupleur est connecté pour, lorsque l'interrupteur (15') est fermé, diriger vers l'installation d'antenne de réception la majeure partie de l'énergie fournie par l'oscillateur linéaire auxiliaire (3').

**Claims**

**1.** Method of checking the state of antenna installations for an FM/CW-type radioaltimeter having a transmitting port (Be) and a receiving port (Br) to which are respectively connected a transmitting antenna installation (Ce, Ae) and a receiving antenna installation (Cr, Ar), the radioaltimeter comprising a linear oscillator (3) to supply a saw-tooth signal, with a link (7, 9) to the transmitting port, a mixer circuit (4) with two links respectively to the oscillator and to the receiving port and a processing unit (2) for processing the signals output from the mixer circuit, **characterized in that**, to check at least one of the two installations, it consists in transmitting, from the radioaltimeter to the installation to be checked, an incident signal, collecting the signals reflected by the installation to be checked in response to the transmission of the incident signal and directing them to the second input of the mixer circuit, and studying, in the processing unit, the signals reflected by the installation to be checked, this study relating to the position and the amplitude of the rays of the spectrum of the signal supplied by the mixer circuit.

**2.** Method according to Claim 1, **characterized in that**, to check the transmitting antenna installation (Ce, Ae), it consists in using the saw-tooth signal as the incident signal, diverting a portion of the signal reflected by the transmitting antenna installation to send it to the mixer circuit (4) by introducing it into the link between the receiving port (Br) and the mixer circuit.

**3.** Method according to Claim 1, **characterized in that**, to check the receive antenna installation (Cr, Ar), it consists in diverting a portion of the saw-tooth signal in order to use it for the incident signal, and in sending a portion of the duly diverted signal to the receiving antenna installation by introducing it into the link between the mixer circuit (4) and the receiving port (Br) .

**4.** Method according to Claim 1, **characterized in that**, to check the receiving antenna installation (Cr, Ar), it consists in using, in order to supply the incident signal, an auxiliary oscillator (3') to deliver a signal similar to, and in synchronism with, the one from the linear oscillator (3), in sending the signal from the auxiliary oscillator to the receiving antenna installation by introducing it into the link between the mixer circuit (4) and the receiving port (Br).

**5.** FM/CW-type radioaltimeter comprising, on the one hand, in series, a control unit (1), a linear oscillator (3) and first coupling elements (7, 9) for coupling the oscillator to a transmitting antenna installation (Ce, Ae) and, on the other hand, a mixer circuit (4) with a first input coupled to the linear oscillator and a second input, second coupling elements (6, 8, 10) for coupling a receiving antenna installation (Cr, Ar) to the second input of the mixer circuit and a processing unit (2) for processing the signals output from the mixer circuit, **characterized in that**, to check the state of at least one of the two installations, it comprises first means for transmitting an incident signal towards the installation to be checked and second means for collecting the signals reflected by the installation to be checked in response to the transmission of the incident signal and directing them to the second input of the mixer circuit, and **in that** the processing unit is suitable for analysing position-wise and amplitude-wise the rays of the spectrum of the signal supplied by the mixer circuit.

6. Radioaltimeter according to Claim 5 **characterized in that**, the installation to be checked being that of the transmitting antenna, the first means comprise the linear oscillator (3) and the first coupling elements (7, 9) and the second means comprise a first and a second directional coupler (11, 13) linked by a switch (12), the first coupler (11) being positioned between the first elements (5, 7, 9) and the transmitting antenna installation (Ce, Ae) and the second coupler (13) being positioned between the receiving antenna installation (Cr, Ar) and the second elements (6, 8, 10), and **in that** the two couplers (11, 13) are connected for, when the switch (12) is closed, diverting to the second elements the major portion of the energy reflected by the transmitting antenna installation.

7. Radioaltimeter according to Claim 5, **characterized in that**, the installation to be checked being that of the receiving antenna, the first means comprise a first and a second directional coupler (14, 16) linked by a switch (15), the first coupler (14) being positioned between the oscillator (3) and the first elements (7, 9) and the second coupler (16) between the receive antenna installation (Cr, Ar) and the second elements (6, 8, 10), and **in that** the two couplers are connected for, when the switch (15) is closed, diverting to the receiving antenna installation a small portion of the energy delivered by the oscillator (3).

8. Radioaltimeter according to Claim 5, **characterized in that**, the installation to be checked being that of the receiving antenna, the first means comprise an auxiliary linear oscillator (3') and a directional coupler (16') linked by a switch (15'), the auxiliary linear oscillator being controlled by the control unit (1) and the coupler being positioned between the receiving antenna installation (Cr, Ar) and the second elements (6, 8, 10) and **in that** the coupler is connected for, when the switch (15') is closed, directing to the receiving antenna installation the major portion of the energy supplied by the auxiliary linear oscillator (3') .

**Patentansprüche**

1. Methode zur Kontrolle des Zustandes der Antennenanlagen für einen Funkhöhenmesser vom Typ FM/CW mit einem Sendezugang (Be) und einem Empfangszugang (Br), an die jeweils eine Sendeantennenanlage (Ce, Ae) bzw. eine Empfangsantennenanlage (Cr, Ar) angeschlossen sind, wobei der Funkhöhenmesser einen linearen Oszillator (3), um ein sägezahnartiges Signal zu liefern, mit einer Verbindung (7, 9) zum Sendezugang, eine Mischschaltung (4) mit zwei Verbindungen zum Oszillator bzw. zum Empfangszugang und ein Bearbeitungselement (2) umfasst, um die Ausgangssignale der Mischschaltung zu bearbeiten, **dadurch gekennzeichnet, dass** sie zur Kontrolle mindestens einer der beiden Anlagen darin besteht, vom Funkhöhenmesser zu der zu kontrollierenden Anlage ein eintreffendes Signal zu senden, die von der zu kontrollierenden Anlage als Antwort auf die Entsendung des eintreffenden Signals reflektierten Signale zu sammeln und sie zum zweiten Eingang der Mischschaltung zu lenken und in dem Bearbeitungselement die von der zu kontrollierenden Anlage reflektierten Signale zu studieren, wobei diese Studie die Position und die Amplitude der Linien des Spektrums des von dieser Mischschaltung gelieferten Signals betrifft.

2. Methode nach Anspruch 1, **dadurch gekennzeichnet, dass** sie zur Kontrolle der Sendeantennenanlage (Ce, Ae) darin besteht, als eintreffendes Signal das sägezahnartige Signal zu verwenden, einen Teil des von der Sendeantennenanlage reflektierten Signals umzulenken, um es zur Mischschaltung (4) zu senden, wobei es in die Verbindung zwischen dem Empfangszugang (Br) und der Mischschaltung eingeleitet wird.

3. Methode nach Anspruch 1, **dadurch gekennzeichnet, dass** sie zur Kontrolle der Empfangsantennenanlage (Cr, Ar) darin besteht, einen Teil des sägezahnartigen Signals umzulenken, um es für das eintreffende Signal zu verwenden, und einen Teil des so abgelenkten Signals zur Empfangsantennenanlage zu senden, wobei es in die Verbindung zwischen der Mischschaltung (4) und dem Empfangszugang (Br) eingeleitet wird.

4. Methode nach Anspruch 1, **dadurch gekennzeichnet, dass** sie zur Kontrolle der Empfangsantennenanlage (Cr, Ar) darin besteht, um das eintreffende Signal zu liefern, einen Hilfsoszillator (3') zu verwenden, um ein Signal ähnlich und synchron mit jenem des linearen Oszillators (3) zu liefern, das Signal des Hilfsoszillators zur Empfangsantennenanlage zu senden, wobei es in die Verbindung zwischen der Mischschaltung (4) und dem Empfangszugang (Br) eingeleitet wird.

5. Funkhöhenmesser des Typs FM/CW, umfassend einerseits in Serie ein Steuerelement (1), einen linearen Oszillator (3) und erste Kopplungsmittel (7, 9), um den Oszillator mit einer Sendeantennenanlage (Ce, Ae) zu koppeln, und andererseits eine Mischschaltung (4) mit einem ersten Eingang, der an den linearen Oszillator gekoppelt ist, und einem zweiten Eingang, zweite Kopplungselemente (6, 8, 10), um eine Empfangsantennenanlage (Cr, Ar) mit dem zweiten Eingang der Mischschaltung zu koppeln, und ein Bearbeitungselement (2), um die Ausgangssignale der Mischschaltung zu bearbeiten, **dadurch gekennzeichnet, dass** er zur Kontrolle des Zustandes von einer der Anlagen erste Mittel, um ein eintreffendes Signal in Richtung der zu kontrollierenden Anlage zu senden, und zweite Mittel umfasst, um die von der zu kontrollierenden Anlage als Antwort auf die Entsendung des eintreffenden Signals reflektierten Signale zu sammeln und zum zweiten Eingang der Mischschaltung zu lenken, und dass das Bearbeitungselement dazu ausgeführt ist, die Linien des Spektrums des von der Mischschaltung gelieferten Signals hinsichtlich Position und Amplitude zu analysieren.

6. Funkhöhenmesser nach Anspruch 5, **dadurch gekennzeichnet, dass**, da die zu kontrollierende Anlage jene der Sendeantenne ist, die ersten Mittel den linearen Oszillator (3) umfassen und die ersten Kopplungselemente (7, 9) und die zweiten Mittel einen ersten und einen zweiten direktiven Koppler (11, 13) umfassen, die durch einen Schalter (12) verbunden sind, wobei der erste Koppler (11) zwischen den ersten Elementen (5, 7, 9) und der Sendeantennenanlage (Ce, Ae) und der zweite Koppler (13) zwischen der Empfangsantennenanlage (Cr, Ar) und den zweiten Elementen (6, 8, 10) angeordnet ist, und dass die zwei Koppler (11, 13) derart angeschlossen sind, dass sie, wenn der Schalter (12) geschlossen ist, den Großteil der von der Sendeantennenanlage reflektierten Energie zu den zweiten Elementen umlenken.

7. Funkhöhenmesser nach Anspruch 5, **dadurch gekennzeichnet, dass**, da die zu kontrollierende Anlage jene der Empfangsantenne ist, die ersten Mittel einen ersten und einen zweiten direktiven Koppler (14, 16), die durch einen Schalter (15) verbunden sind, umfassen, wobei der erste Koppler (14) zwischen dem Oszillator (3) und den ersten Elementen (7, 9) und der zweite Koppler (16) zwischen der Empfangsantennenanlage (Cr, Ar) und den zweiten Elementen (6, 8, 10) angeordnet ist, und dass die beiden Koppler derart angeschlossen sind, dass sie, wenn der Schalter (15) geschlossen ist, einen geringen Teil der vom Oszillator (3) gelieferten Energie zur Empfangsantennenanlage umlenken.

8. Funkhöhenmesser nach Anspruch 5, **dadurch gekennzeichnet, dass**, da die zu kontrollierende Anlage jene der Empfangsantenne ist, die ersten Mittel einen linearen Hilfsoszillator (3') und einen direktiven Koppler (16') umfassen, die durch einen Schalter (15') verbunden sind, wobei der lineare Hilfsoszillator vom Steuerelement (1) gesteuert wird und der Koppler zwischen der Empfangsantennenanlage (Cr, Ar) und den zweiten Elementen (6, 8, 10) angeordnet ist, und dass der Koppler derart angeschlossen ist, dass er, wenn der Schalter (15') geschlossen ist, den Großteil der vom linearen Hilfsoszillator (3') gelieferten Energie zur Empfangsantennenanlage lenkt.

FIG.1

FIG.3

FIG.2

FIG.4

FIG.5